# EUROPÄISCHE PATENTANMELDUNG

(11) **EP 1 184 600 A1**
(43) Veröffentlichungstag der Anmeldung: **06.03.2002**
(21) Anmeldenummer: 01106979.6
(22) Anmeldetag: 21.03.2001
(51) Int. Cl.: F16H 45/02

(54) **Betriebsmittelversorgungssystem für eine hydrodynamische Kupplung und Anfahreinheit mit einer hydrodynamischen Kupplung**

(30) Priorität: 31.08.2000 DE 10043146; 02.03.2001 DE 10110078
(71) Anmelder: Voith Turbo GmbH & Co. KG, 89522 Heidenheim (DE)
(72) Erfinder: Höller, Heinz, 74564 Crailsheim (DE); Dr. Reinhard Kernchen, 74589 Satteldorf (DE); Dr. Achim Menne, 74564 Crailsheim (DE); Prof. Werner Klement, 89520 Heidenheim (DE)
(74) Vertreter: Dr. Weitzel & Partner

(57) **Zusammenfassung**

Es betrifft eine hydrodynamische Kupplung (1)
- mit zwei Schaufelrädern - einem Pumpenrad (2) und einem Turbinenrad (3) - die miteinander einen torusförmigen Arbeitsraum (4) bilden;
- mit einer drehfest mit dem Pumpenrad (2) gekoppelten Pumpenradschale (6), welche das Turbinenrad (3) in axialer Richtung unter Bildung eines ersten Betriebsmittelführungskanales-oder Raumes (9) umschließt;
- mit einem zweiten Betriebsmittelführungskanal- oder Raum (12), welcher im Bereich des Innendurchmessers des torusförmigen Arbeitsraumes (4) oder unterhalb dessen mündet;
- der erste und zweite Betriebsmittelführungskanal- oder Raum sind wahlweise jeweils als Zufuhr-oder Ablaufkanal- oder Raum (9,12) zum oder vom torusförmigen Arbeitsraum (4) nutzbar.

## Beschreibung

Die Erfindung betrifft eine hydrodynamische Kupplung, im einzelnen mit den Merkmalen aus dem Oberbegriff des Anspruches 1; ferner ein Betriebsmittelversorgungssystem für eine hydrodynamische Kupplung und eine Anfahreinheit mit einer hydrodynamischen Kupplung.

Anfahreinheiten für den Einsatz in Schaltgetrieben, automatisierten Schaltgetrieben oder Automatgetrieben sind in einer Vielzahl von Ausführungen bekannt. Diese umfassen in der Regel ein hydrodynamisches Bauelement in Form eines hydrodynamischen Drehzahl/Drehmomentwandlers oder einer hydrodynamischen Kupplung. Bezüglich einer möglichen Ausführung einer Anfahreinheit für den Einsatz in Getrieben mit einer hydrodynamischen Kupplung wird auf die Druckschrift DE 198 04 635 A1 verwiesen. Diese offenbart eine Ausführung einer Anfahreinheit mit geringer axialer Baulänge, umfassend ein Pumpenrad und ein Turbinenrad, die miteinander einen torusförmigen Arbeitsraum bilden, wobei das Pumpenrad auf der Motorabtriebsseite angeordnet ist, d. h. das Turbinenrad ist räumlich zwischen einem Eingang der Anfahreinheit und dem Pumpenrad angeordnet. Das Pumpenrad ist zu diesem Zweck drehfest über ein Element, welches gleichzeitig die Pumpenradschale bildet, mit dem Eingang bzw. mit einem mit diesem gekoppelten Antrieb drehfest verbunden. Es ist eine Überbrückungskupplung vorgesehen, welche parallel zur hydrodynamischen Kupplung geschaltet ist. Diese ermöglicht eine Leistungsübertragung vom Eingang der Anfahreinheit zum Ausgang unter Umgehung des hydrodynamischen Bauelementes. Die Überbrückungskupplung ist dabei als separates Bauelement neben der Einheit aus Pumpenrad und Turbinenrad angeordnet. Des weiteren umfaßt die Anfahreinheit eine Vorrichtung zur Dämpfung von Schwingungen, welche in einem Durchmesserbereich angeordnet ist, der oberhalb der radial äußeren Abmessung des torusförmigen Arbeitsraumes der hydrodynamischen Kupplung angeordnet ist und Bestandteil der Überbrückungskupplung ist bzw. ein Kupplungselement bildet. Anders ausgedrückt ist die Vorrichtung zur Dämpfung von Schwingungen im wesentlichen im Bereich einer Ebene oder geringfügig versetzt zueinander mit der hydrodynamischen Kupplung angeordnet. Diese Lösung baut zwar schon relativ kurz, erfüllt jedoch hinsichtlich der erforderlichen axialen Baulänge nicht die Erfordernisse bestimmter vorgegebener Einbausituationen. Des weiteren ist diese Ausführung aufgrund der Vielzahl von Funktionselementen durch eine hohe Bauteilanzahl sowie einen enormen Montageaufwand charakterisiert.

Der Erfindung liegt daher die Aufgabe zugrunde, eine Anfahreinheit der eingangs genannten Art, umfassend eine hydrodynamische Kupplung und eine Überbrückungskupplung, welche parallel schaltbar sind, sowie deren Einzelelemente derart weiterzuentwicklen, daß diese durch einen sehr geringen Bauraumbedarf in axialer Richtung sowie eine geringe Bauteilanzahl und die Zusammenfassung von Funktionselementen charakterisiert ist. Der konstruktive Aufwand sollte dabei möglichst gering gehalten werden.

Die erfindungsgemäße Lösung der Aufgabe ist durch die Merkmale der Ansprüche 1, 4 und 11 charakterisiert. Vorteilhafte Ausgestaltungen sind in den Unteransprüchen beschrieben.

Eine Hydrodynamische Kupplung mit zwei Schaufelrädern - einem Pumpenrad und einem Turbinenrad - die miteinander einen torusförmigen Arbeitsraum bilden, umfaßt eine drehfest mit dem Pumpenrad gekoppelte Pumpenradschale, welche das Turbinenrad in axialer Richtung unter Bildung eines ersten Betriebsmittelführungskanales-oder Raumes umschließt. Ferner ist ein zweiter Betriebsmittelführungskanal- oder Raum, welcher im Bereich des Innendurchmessers des torusförmigen Arbeitsraumes oder unterhalb dessen mündet, vorgesehen. Erfindungsgemäß sind der erste und zweite Betriebsmittelführungskanal-bzw. Raum wahlweise jeweils als Zufuhr-oder Ablaufkanal- bzw. Raum zum torusförmigen Arbeitsraum nutzbar. Durch diese wahlweise Änderung der Funktion der einzelnen Betriebsmittelführungskanäle-bzw. Räume kann die Durchströmungsrichtung der hydrodynamischen Kupplung auf einfache Art und Weise zwischen zentripetal und zentrifugal geändert werden.

Die erfindungsgemäße Lösung bildet die konstruktive Grundvoraussetzung des Aufbaus einer hydrodynamischen Kupplung für die Schaffung einer Anfahreinheit mit minimaler axialer Baulänge beim Einsatz in Anfahreinheiten mit Überbrückungskupplung und Druckaufbau für die Überbrückungskupplung über die Betriebsmittelführung der hydrodynamischen Kupplung.

Um eine Zuführung des Betriebsmittels bei zentripetaler Durchströmung, d.h. Durchströmung der hydrodynamischen Kupplung über den ersten Betriebsmittelführungskanal - oder Raum zum radial äußeren Bereich des torusförmigen Arbeitsraumes im Bereich der Trennebene zwischen Pumpen- und Turbinenrad und von dort in den sich im torusförmigen Arbeitsraum bildenden Arbeitskreislauf zu gewährleisten, ist es erforderlich, Pumpenrad und Turbinenrad in entsprechender Art und Weise zueinander anzuordnen und einen Spalt zwischen ihnen so zu gestalten, daß der so gebildete Eintrittswinkel immer eine Zufuhr in die Meridianströmung des Arbeitskreislaufes bewirkt und nicht abströmend wirkt. Dazu sind Pumpenrad und Turbinenrad in radialer Richtung mit Versatz ausgeführt.

Das der hydrodynamischen Kupplung zugeordnete Betriebsmittelsystem umfaßt eine Betriebsmittelversorgungsquelle und einen ersten Anschluß zur Kopplung mit dem ersten Betriebsmittelführungskanal-oder Raum sowie einen zweiten Anschluß zur Kopplung mit dem zweiten Betriebsmittelführungskanal-oder Raum. Erfindungsgemäß sind Mittel zur wahlweisen Änderung der Durchströmungsrichtung der hydrodynamischen Kupplung durch Zuweisung der Funktion des Zulaufes oder des Ablaufes zu den beiden Betriebsmittelversorgungskanälen -oder Räumen vorgesehen. Der Begriff Anschluß ist nicht nur als konstruktives Element sondern hinsichtlich seiner Funktion als funktionales Element zu verstehen. Gemeint ist der Übergang zwischen den Betriebsmittelführungskanälen- oder Räumen der hydrodynamischen Kupplung und den Verbindungsleitungen zur Betriebsmittelquelle. Dabei können einzelne Elemente des Betriebsmittelversorgungssystems auch Bestandteil der hydrodynamischen Kupplung sein oder nicht. Dies gilt insbesondere für die Mittel zur wahlweisen Änderung der Durchströmungsrichtung der hydrodynamischen Kupplung durch Zuweisung der Funktion des Zulaufes oder des Ablaufes zu den beiden Betriebsmittelversorgungskanälen -oder Räumen und/oder Teile der Verbindungsleitungen zwischen Betriebsmittelversorgungsquelle und den Betriebsmittelführungskanälen oder Räumen.

Mit dem erfindungsgemäß gestalteten Betriebsmittelversorgungssystem einer hydrodynamischen Kupplung kann die Durchströmungsrichtung einer hydrodynamischen Kupplung auf einfache Art und Weise ohne bauliche Modifikationen geändert werden. Der Grundaufbau einer hydrodynamischen Kupplung gemäß Anspruch 1 wird beibehalten.

Bezüglich der Ausgestaltung des Betriebsmittelversorgungssystems bestehen mehrere Möglichkeiten. Die konkrete Ausführung erfolgt entsprechend den Erfordernissen des Einsatzfalles und liegt im Ermessen des zuständigen Fachmannes.

In einer besonders einfachen Ausgestaltung umfassen die Mittel eine Ventileinrichtung mit wenigstens zwei Schaltstellungen. Eine erste Schaltstellung ist dabei durch die Kopplung zwischen Zulauf und erstem Betriebsmittelführungskanal-oder Raum und Ablauf und zweitem Betriebsmittelführungskanal- oder Raum und die zweite Schaltstellung durch die Kopplung zwischen Zulauf und zweitem Betriebsmittelführungskanal-oder Raum und Ablauf und erstem Betriebsmittelführungskanal- oder Raum charakterisiert. Beide Betriebsmittelführungskanäle - oder Räume sind vorzugsweise über einen offenen Kreislauf miteinander gekoppelt.

Bei der Ausführung der hydrodynamischen Kupplung handelt es sich um eine Strömungskupplung, d.h. ein Bauelement, welches bei Leistungsübertragung zwischen einem Antrieb und einem Abtrieb nur eine Drehzahlwandlung zuläßt, d.h. gegenüber einem Wandler frei von einer Wandlung des Drehmomentes und damit zwangsweise gekoppelt der Drehzahl ist. Diese können geregelt oder ungeregelt sein. Geregelte hydrodynamische Kupplungen sind Kupplungen, bei denen der Füllungsgrad während des Betriebes beliebig zwischen voller Füllung und Entleerung verändert werden kann, wodurch die Leistungsaufnahme und damit die Übertragungsfähigkeit der Kupplung einstellbar und beim Einsatz in Fahrzeugen eine stufenlose lastabhängige Drehzahlregelung der Antriebsmaschine und/oder Abtriebsseite ermöglicht wird. Die hydrodynamische Kupplung kann dabei als Kupplung mit einem torusförmigen Arbeitsraum, der von einem als Pumpenrad fungierenden Primärschaufelrad und einem als Turbinenrad fungierenden Sekundärschaufelrad gebildet wird oder als sogenannte Doppelkupplung, d.h. mit zwei, vom Primärschaufelrad und Sekundärschaufelrad gebildeten torusförmigen Arbeitsräumen ausgebildet sein. Die Regelbarkeit erfolgt primär über die Änderung des Massenstromes, d.h. die Beeinflussung des Füllungsgrades im Arbeitsraum bzw. des Betriebsmittelumlaufes im Arbeitskreislauf. Die Steuerung- und/oder Regelung des Füllungsgrades der hydrodynamischen Kupplung erfolgt dabei vorzugsweise über eine Drucksteuerung. Gekoppelt mit der Füllungsgradänderung ist dabei die Veränderung des Absolutdruckes des torusförmigen Arbeitsraumes. Daher können Teilfüllungszustände über die Veränderung des Absolutdruckes eingeregelt werden. Diese freie Einstellbarkeit ermöglicht es, hinsichtlich unterschiedlicher Kriterien, beispielsweise Energieverbrauch und Schadstoffemission, optimierte Betriebspunkte im Kennfeld der Antriebsmaschine anzusteuern.

Gemäß einer vorteilhaften Weiterentwicklung besteht die Möglichkeit, die einzelnen Betriebsmittelführungskanäle oder Räume über einen offenen Kreislauf miteinander zu koppeln und jedem oder zumindestens einem Betriebsmittelführungskanal oder Raum eine steuerbare Ventileinrichtung zuzuordnen, wobei über die Vorgabe der in den Betriebsmittelkanälen bzw. Räumen einzustellenden Druckwerte die Strömungsrichtung und die übertragbare Leistung in der hydrodynamischen Kupplung festgelegt werden kann.

Die erfindungsgemäß eine hydrodynamische Kupplung mit den Merkmalen des Anspruchs 1 gestaltete Anfahreinheit umfaßt einen mit einem Antrieb koppelbaren Eingang und einen mit einem Abtrieb koppelbaren Ausgang. Zwischen dem Eingang und dem Ausgang ist die hydrodynamische Kupplung angeordnet. Dem Pumpenrad ist dabei eine sogenannte Pumpenradschale zugeordnet, welche drehfest mit diesem verbunden ist und das Turbinenrad in axialer Richtung unter Bildung eines ersten Betriebsmittelführungskanales- oder Raumes umschließt. Die Pumpenradschale kann dabei einteilig mit dem Pumpenrad ausgeführt sein, vorzugsweise werden jedoch mehrteilige Ausführungen verwendet, wobei die drehfeste Verbindung über entsprechende Verbindungselemente oder andere Kopplungsmöglichkeiten erfolgt. Ferner umfaßt die hydrodynamische Kupplung einen zweiten Betriebsmittelführungskanal-oder Raum, welcher im Bereich des Innendurchmessers des torusförmigen Arbeitsraumes oder unterhalb dessen mündet. Erfindungsgemäß sind der erste und zweite Betriebsmittelführungskanal- bzw. Raum wahlweise jeweils als Zufuhr-oder Ablaufkanal- bzw. Raum zum torusförmigen Arbeitsraum nutzbar. Durch diese wahlweise Änderung der Funktion der einzelnen Betriebsmittelführungskanäle-bzw. Räume kann die Durchströmungsrichtung der hydrodynamischen Kupplung auf einfache Art und Weise zwischen zentripetal und zentrifugal geändert werden. Die Anfahreinheit umfaßt des weiteren eine schaltbare Kupplung, insbesondere eine Überbrückungskupplung, welche zur hydrodynamischen Kupplung parallel schaltbar ist. Dies bedeutet, daß im Regelfall, insbesondere für den Einsatz in automatisierten Schaltgetrieben, während eines Großteils des Betriebes der Anfahreinheit die Leistungsübertragung über nur eines der beiden Elemente - hydrodynamische Kupplung oder Überbrückungskupplung - erfolgt. Im erstgenannten Fall erfolgt die Leistungsübertragung über einen hydrodynamischen Leistungszweig unter Ausnutzung der Vorteile der hydrodynamischen Leistungsübertragung, während im zweiten Fall die Leistungsübertragung im wesentlichen mechanisch durch die mechanische Durchkupplung erfolgt. Es besteht dabei jedoch auch die Möglichkeit, daß beide Elemente zumindest im Übergangsbereich, d.h. bei Umschaltung zwischen hydrodynamischem und mechanischem Leistungszweig gemeinsam in Eingriff stehen. Dieser gemeinsame Eingriff ist jedoch von beschränkter Dauer und sollte bestimmte vordefinierte Zeiten nicht überschreiten. Die Überbrückungskupplung ist als mechanische Kupplung, vorzugsweise in Scheibenbauweise, ausgeführt.

Die Überbrückungskupplung umfaßt mindestens ein erstes Kupplungselement in Form einer ersten Kupplungsscheibe und ein zweites Kupplungselement in Form einer zweiten Kupplungsscheibe, die miteinander wenigstens mittelbar, d. h. entweder direkt oder indirekt über weitere Übertragungsmittel reibschlüssig miteinander in Wirkverbindung bringbar sind. Dabei ist eine Integration von Bestandteilen der Überbrückungskupplung im hydrodynamischen Bauelement vorgesehen. Diese wird dadurch realisiert, daß ein Kupplungselement, in der Regel eine erste Kupplungsscheibe drehfest mit dem Eingang, insbesondere der Primärradschale verbunden ist, während die andere zweite Kupplungsscheibe drehfest mit dem Ausgang, vorzugsweise dem Turbinenrad verbunden ist. Den Kupplungsscheiben sind Mittel zur Erzeugung einer Anpreßkraft und damit zur Erzeugung einer wenigstens mittelbaren reibschlüssigen Verbindung zwischen erster Kupplungsscheibe und zweiter Kupplungsscheibe zugeordnet.

Die erfindungsgemäße Lösung ermöglicht durch Integration der einzelnen Elemente der Überbrückungskupplung in das Anfahrelement in Form der hydrodynamischen Kupplung eine Ausgestaltung einer Anfahreinheit mit sehr geringem Bauraumbedarf in axialer Richtung, da hier bereits ohnehin vorhandene Bauelemente gleichzeitig mit der Übernahme der Funktion des anderen Elementes betraut werden.

Die Mittel zur Erzeugung einer Anpreßkraft umfassen mindestens ein mit Druckmittel beaufschlagbares Kolbenelement. Dieses kann separat den Kupplungsscheiben zugeordnet werden. In einer besonders kompakten und damit vorteilhaften Ausgestaltung wird jedoch das Turbinenrad als Kolbenelement genutzt. Der Druckraum zur Beaufschlagung des Kolbenelementes wird vom Turbinenrad umschlossenen Teil des torusförmigen Arbeitsraumes gebildet. Bezüglich der konstruktiven Ausführung zur Übernahme der Funktion eines Elementes und des weiteren eines Elementes der Mittel zur Erzeugung einer Anpreßkraft bestehen im wesentlichen die nachfolgend genannten Möglichkeiten:
1. drehfeste Kopplung des Turbinenrades mit dem Ausgang der Anfahreinheit jedoch axiale Verschiebbarkeit des Turbinenrades;
2. drehfeste Verbindung des Turbinenrades mit dem Ausgang der Anfahreinheit und in axialer Richtung elastische Ausführung der Kopplung zwischen Turbinenrad und Ausgang.

Im erstgenannten Fall wird die reibschlüssige Verbindung zwischen der ersten Kupplungsscheibe und der zweiten, drehfest mit dem Turbinenrad verbundenen Kupplungsscheibe durch die Verschiebung des Turbinenrades gewährleistet, während im zweiten Fall lediglich eine reversible Verformung der Verbindung zwischen Turbinenrad und Ausgang der Anfahreinheit die Anpressung ermöglicht. Beide Lösungen sind dabei für Ausführungen mit im entkuppelten Zustand geringem axialen Abstand zwischen erster und zweiter Kupplungsscheibe geeignet, während die erstgenannte Lösung auch für größere Abstände denkbar ist. Die axiale Verschiebbarkeit des Turbinenrades erfolgt dabei in einem Bereich von 0,1 bis 2 mm.

Um eine nahezu selbsttätige Überbrückung und des weiteren eine sichere Betriebsweise bei Leistungsübertragung über das hydrodynamische Kupplungselement zu realisieren, bedarf es bei axialer Verschiebbarkeit des Turbinenrades einer Gegenkraft, welche das Turbinenrad in seiner Lage gegenüber dem Pumpenschaufelrad fixiert. Diese Gegenkraft wird erfindungsgemäß von zum Arbeitsraum zugeführtem Betriebsmittel erzeugt, welches entlang des Außenumfanges des Turbinenrades zwischen den einzelnen Kupplungsscheiben der Überbrückungskupplung in den Bereich der Trennebene zwischen Pumpenrad und Turbinenrad im Bereich des äußeren Durchmessers des torusförmigen Arbeitsraumes geführt wird und von dort in das Pumpenrad eingebracht wird und die hydrodynamische Kupplung zentripetal durchströmt. Üblicherweise liegen beide Kupplungsscheiben der schaltbaren Kupplung nahe aufeinander. Der dabei verbleibende Spalt im 10-tel-mm Bereich dient als Drosselstelle für das durchströmende Betriebsmittel. Durch diese Drosselstelle stellt sich eine Druckdifferenz zwischen den Kolbenflächen ein, aus der die erforderliche Anpreßkraft für das Öffnen und Schließen für die Überbrückung resultiert. Dies kann im einfachsten Fall bei Ausführungen mit drehfester Verbindung und axialer Verschiebbarkeit durch Vorspannung des Turbinenrades realisiert werden, beispielsweise mittels mindestens einer Federeinrichtung. Dies ist in Analogie auch bei der in axialer Richtung erfolgenden elastischen Anbindung des Turbinenrades an den Ausgang möglich. Bei Umschaltung vom hydrodynamischen Betrieb auf mechanischen Durchtrieb wird die Betriebsmittelzuführung hinsichtlich ihrer Richtung geändert, d. h. nicht mehr um den Außenumfang des Turbinenrades sondern die Durchströmung erfolgt zentrifugal. Die zwischen den Kupplungsscheiben durch Führung des Betriebsmittels bei zentripedaler Durchströmung bedingte und am Turbinenrad wirksame Gegenkraft fällt weg. Das Betriebsmittel wird nunmehr im Bereich des Innenumfanges dem torusförmigen Arbeitsraum zugeführt und die durch das Betriebsmittel am Turbinenrad erzeugte Druckkraft bewirkt eine Verschiebung oder Verkippung des Turbinenrades in Richtung vom Pumpenrad weg, wobei die mit dem Turbinenrad drehfest verbundene Kupplungsscheibe reibschlüssig mit der mit der Pumpenradschale gekoppelten Kupplungsscheibe in Wirkverbindung gebracht wird.

Bezüglich der Anbindung der ersten und zweiten Kupplungsscheibe an das Turbinenrad bzw. die Pumpenradschale bestehen eine Vielzahl von Möglichkeiten. Die räumliche Anordnung erfolgt in axialer Richtung betrachtet neben dem torusförmigen Arbeitsraum bzw. dahinter. Die Anordnung in radialer Richtung ist durch Außen- und Innenabmessungen gekennzeichnet, welche vorzugsweise im Bereich zwischen dem äußeren und dem inneren Durchmesser des torusfömigen Arbeitsraumes liegen. Vorzugsweise sind die Reibflächen, welche von den Kupplungsscheiben gebildet werden, parallel zur Trennebene zwischen dem Pumpenrad und dem Turbinenrad ausgerichtet, so daß die erforderliche Anpreßkraft möglichst gering gehalten werden kann; fertigungstechnische Toleranzen sind ohne Probleme ausgleichbar.

Vorzugsweise erfolgt die drehfeste Kopplung mit dem Turbinenrad direkt an der Rückseite des den Torus bildenden Teiles des Turbinenrades. Die drehfeste Verbindung der einzelnen Kupplungsscheiben mit dem Turbinenrad und dem Pumpenrad bzw. der Pumpenradschale kann ebenfalls auf unterschiedliche Art und Weise realisiert werden. Denkbar sind
a) die einteilige Ausführung von Kupplungsscheibe und Turbinenrad und/oder Kupplungsscheibe und Pumpenradschale;
b) Ausbildung der einzelnen Kupplungsscheiben als separate Bauelemente und drehfeste Kopplung über entsprechende Verbindungselemente mit dem Pumpenrad und/oder dem Turbinenrad.

In beiden Fällen kann die Reibfläche direkt von der Kupplungsscheibe, d. h. im erstgenannten Fall von der Außenseite des Turbinenrades und einer Innenfläche der Pumpenradschale und im zweiten Fall vom separaten Bauelement gebildet werden oder aber von einem, dem Außenumfang des Turbinenrades oder den einzelnen Kupplungsscheiben zugeordneten Reibbelag.

Unter einem weiteren besonders vorteilhaften Aspekt der Erfindung umfaßt die Anfahreinheit eine Vorrichtung zur Dämpfung von Schwingungen, insbesondere einen Torsionsschwingungsdämpfer. Dieser ist zum hydrodynamischen Bauelement in Form der hydrodynamischen Kupplung und zur Überbrückungskupplung vorzugsweise in Reihe angeordnet. Dies wird dadurch erzielt, daß die Vorrichtung zur Dämpfung von Schwingungen zwischen dem Turbinenrad und dem Ausgang angeordnet ist. Das bedeutet, daß das Turbinenrad mit dem Eingang der Vorrichtung zur Dämpfung von Schwingungen gekoppelt ist oder über die reibschlüssige Verbindung bei Überbrückung des hydrodynamischen Leistungszweiges der Eingang der Vorrichtung zur Dämpfung von Schwingungen mit dem Pumpenrad über die Pumpenradschale drehfest verbunden wird. Räumlich erfolgt die Anordnung der Vorrichtung zur Dämpfung von Schwingungen dabei in axialer Richtung betrachtet im wesentlichen im Bereich bzw. in einer Ebene mit dem hydrodynamischen Bauelement. In radialer Richtung ist die Vorrichtung zur Dämpfung von Schwingungen innerhalb des den Innenumfanges des den torusförmigen Arbeitsraum bildenden Teiles der hydrodynamischen Kupplung beschreibenden Durchmessers angeordnet. Mit dieser Ausführung wird neben einer besonders kurzen axialen Baulänge auch der in radialer Richtung zur Verfügung stehende Bauraum optimal ausgenutzt. Bezüglich der Ausführung der Vorrichtung zur Dämpfung von Schwingungen bestehen keinerlei Restriktionen, d. h. jegliche Art von Schwingungsdämpfer ist denkbar. Zum Einsatz gelangen dabei beispielsweise Vorrichtungen zur Dämpfung von Schwingungen, welche lediglich auf Reibdämpfung basieren oder hydraulische Dämpfungseinrichtungen. Die Ausführung als hydraulische Dämpfungseinrichtung umfaßt neben einem Primärteil und einem Sekundärteil, welche drehfest miteinander zum Zwecke der Drehmomentenübertragung koppelbar sind, und in Umfangsrichtung gegeneinander um einen bestimmten Winkel verdrehbar sind, Mittel zur Feder- und/oder Dämpfungskopplung zwischen dem Primärteil und dem Sekundärteil. Die Mittel zur Dämpfungskopplung umfassen dabei mit Hydraulikflüssigkeit füllbare Kammern, in welche Schwingungen verlagert werden. Die Vorrichtung zur Dämpfung von Schwingungen muß dabei lediglich auf das Ausgangsmoment am Turbinenrad ausgelegt werden, weshalb die Vorrichtung zur Dämpfung von Schwingungen in radialer und axialer Richtung sehr klein baut und in der Regel keine Vergrößerung der durch das hydrodynamische Bauelement vorgegebenen Abmessungen der Anfahreinheit bewirkt.

Auch andere Anordnungen der Vorrichtung zur Dämpfung von Schwingungen sind denkbar, beispielsweise nur in einem Leistungszweig in Reihe zur schaltbaren Kupplung vor oder hinter dieser oder zur hydrodynamischen Kupplung.

Bezüglich der räumlichen Anordnung von Pumpenrad und Turbinenrad bezogen auf den Eingang und den Ausgang der Anfahreinheit bestehen im wesentlichen die zwei folgenden Möglichkeiten:
1. Anordnung des Pumpenrades in axialer Richtung zwischen dem Eingang der Anfahreinheit und dem Turbinenrad der hydrodynamischen Kupplung;
2. Anordnung des Turbinenrades der hydrodynamischen Kupplung in axialer Richtung zwischen dem Eingang der Anfahreinheit und dem Pumpenrad.

Vorzugsweise findet die letztgenannte Möglichkeit Anwendung, da in diesem Fall trotz geringem Bauraumes die Kollisionsmöglichkeiten der einzelnen Elemente optimal beherrscht werden können.

Die erfindungsgemäße Lösung eignet sich für den Einsatz in Schaltgetrieben, insbesondere Automatgetrieben, aber auch Getrieben mit stufenlosen Getriebeteil (CVT), beispielsweise in Form von Zugmittelgetrieben und Toroidalgetrieben. Die Anfahreinheit kann dabei als Baueinheit separat vormontiert handelbar sein. Die Verbindung mit dem Getriebe erfolgt dabei durch Integration im Getriebegehäuse oder Hintereinanderschaltung mit Schaltstufen, wobei in beiden Fällen die Kopplung beispielsweise durch Aufstecken auf eine mit Nachschaltstufen koppelbare Welle oder einem stufenlosen Getriebeteil realisiert werden kann.

Unter einem weiteren Aspekt der Erfindung ist die erfindungsgemäße Anfahreinheit sowohl für den Einsatz in Antriebssträngen in stationären Anlagen als auch Fahrzeugen geeignet.

Die erfindungsgemäße Lösung ist nachfolgend anhand von Figuren erläutert. Darin ist im einzelnen folgendes dargestellt:
- Figur 1a und 1b: verdeutlichen das Grundprinzip der erfindungsgemäßen wahlweisen Änderung der Durchströmungsrichtung einer hydrodynamischen Kupplung;
- Figur 2a: verdeutlicht eine vorteilhafte Ausgestaltung einer erfindungsgemäßen Anfahreinheit;
- Figur 2b: verdeutlicht ein Detail gemäß Figur 2a;
- Figur 3: verdeutlicht eine vorteilhafte Ausgestaltung gemäß Figur 2a;
- Figur 4: verdeutlicht eine vorteilhafte Ausführung einer Anfahreinheit mit gegenüber den Ausführungen gemäß Figur 2 und Figur 3 mit vertauschten Schaufelrädern;
- Figur 5a und 5b: verdeutlichen die beiden Durchströmungszustände anhand einer Ausführung gemäß Figur 2;
- Figuren 6 und 7: zeigen in schematisch stark vereinfachter Darstellung Möglichkeiten zur Realisierung einer Drucksteuerung.

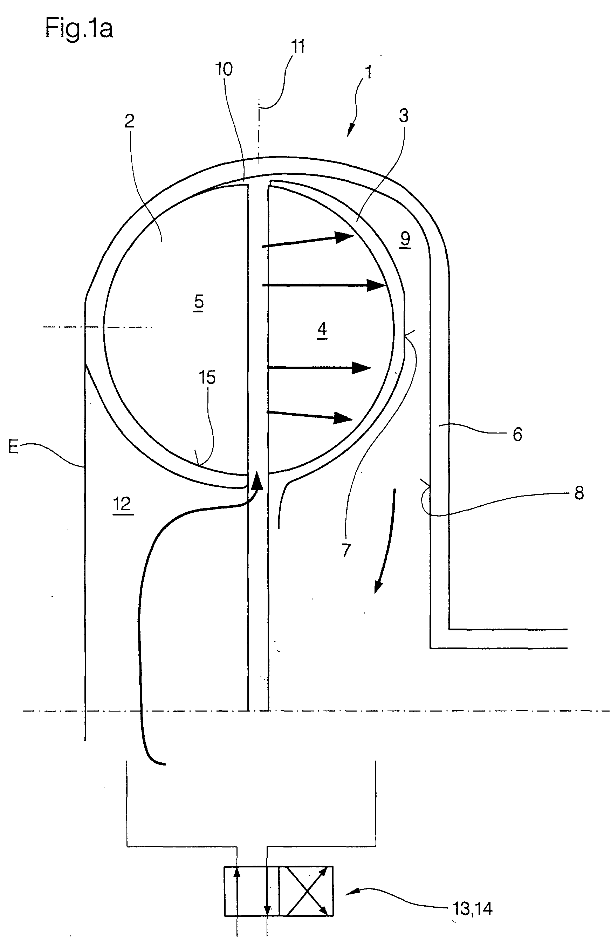

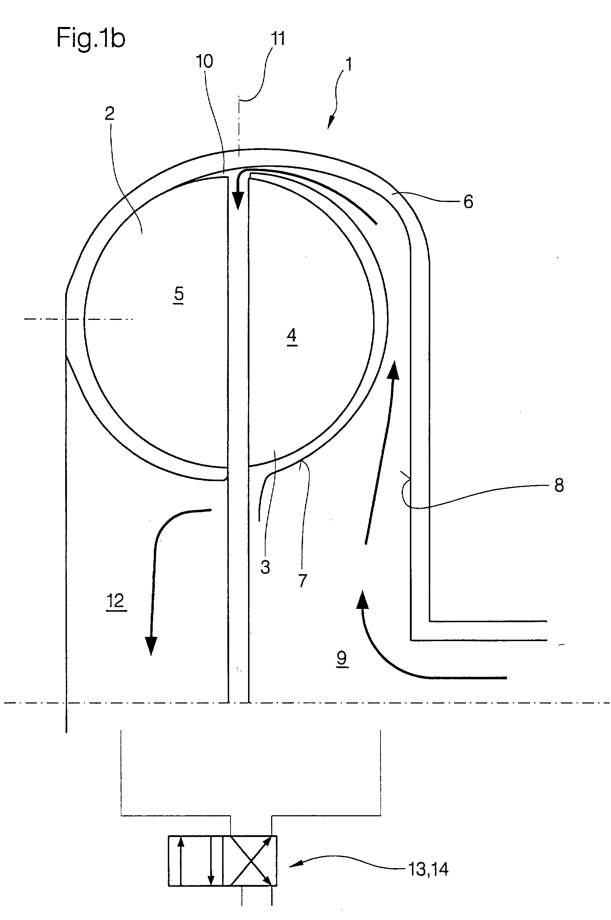

Die Figur 1a und 1b verdeutlichen in schematischer vereinfachter Darstellung das Grundprinzip der Funktionsänderungen durch Änderung der Durchströmung einer hydrodynamischen Kupplung 1. Diese umfaßt ein in der Regel als Pumpenrad 2 bezeichnetes Primärrad und ein als Sekundärrad bezeichnetes Turbinenrad 3. Beide bilden miteinander einen torusförmigen Arbeitsraum 4, in welchem während des Betriebes der hydrodynamischen Kupplung ein geschlossener Arbeitskreislauf 5 durch Umwälzung des Betriebsmittels gebildet wird. Das Primärrad 2 ist drehfest mit einer Pumpenradschale 6 gekoppelt, welches in axialer Richtung das Turbinenrad 3 umschließt. Die Pumpenradschale 6 umschließt dabei das Turbinenrad 3 derart, daß zwischen dem Außenumfang 7 des Turbinenrades und der Innenkontur 8 der Pumpenradschale mindestens ein Betriebsmittelführungskanal - oder Raum 9 zur Führung von Betriebsmittel gebildet wird. Im einzelnen soll dieser es ermöglichen, Betriebsmittel zwischen Turbinenrad 3 und Pumpenradschale 6 im Bereich der radial äußeren Abmessungen 10 der hydrodynamischen Kupplung 1, insbesondere des Primärrades 2 und des Turbinenrades 3 im Bereich einer Trennebene 11 zwischen Pumpenrad 2 und Turbinenrad 3 von oben in Richtung des sich im torusförmigen Arbeitsraum 4 einstellenden Arbeitskreislaufes 5 in diesen einzubringen und eine zentripetale Durchströmung zu gewährleisten. Des weiteren ist der hydrodynamischen Kupplung 1 mindestens ein Betriebsmittelführungskanal - oder Raum 12 zugeordnet, welcher eine Zufuhr des Betriebsmittels zum torusförmigen Arbeitsraum 5 in zentrifugaler Richtung ermöglicht. Bei dem Betriebsmittelführungskanal - oder Raum 12 kann es sich dabei um eine Leitung oder speziell in der Anschlußkonstruktion ausgebildete und eingearbeitete Kanäle handeln. Der Begriff Kanal ist hier hinsichtlich der Funktion zu betrachten und kann auch Innenräume oder kombinierte Kanal und Raumabschnitte mit einschließen. Insbesondere der mit 9 bezeichnete Betriebsmittelführungskanal - oder Raum liegt hier als ringförmiger Betriebsmittel-Führungsraum vor. Des weiteren wird jeder der Betriebsmittelführungskanäle derart gestaltet, daß diese neben der Zufuhr von Betriebsmittel zum torusförmigen Arbeitsraum 4 auch der Abfuhr dienen können, d.h. somit mit mindestens einem Eintritt und/oder einem Austritt aus dem torusförmigen Arbeitsraum verbunden ist. Dabei ist es unerheblich, in welchem Bereich das Betriebsmittel aus dem torusförmigen Arbeitsraum 4 austritt. Erfindungsgemäß sind die beiden Betriebsmittelführungskanäle- oder Räume 9 und 12 wahlweise als Zulauf oder Ablauf nutzbar, so daß auch die Durchströmungsrichtung geändert wird. Dazu sind Mittel zur wahlweisen Änderung der Durchströmungsrichtung 13 der hydrodynamischen Kupplung 1 vorgesehen. Diese Mittel können auch als Durchströmungsrichtungsänderungsmittel bezeichnet werden. Diese umfassen im einfachsten Fall eine Ventileinrichtung, welche die Funktion der beschriebenen Betriebsmittelkanäle bzw. Betriebsmittel-Führungsräume hinsichtlich ihrer Funktion Zulauf oder Ablauf vertauscht. Die Ventileinrichtung ist dabei im einfachsten Fall als 4/2-Wegeventiieinrichtung 14 ausgeführt. Die in Figur 1a dargestellte zweite Ventilstellung der Ventileinrichtung 14 ist dadurch charakterisiert, daß die hydrodynamische Kupplung 1 zentrifugal durchströmt wird. In diesem Fall wird im Bereich des Innenumfanges 15 dem torusförmigen Arbeitsraum 4 Betriebsmittel über die Betriebsmittelführungskanäle oder Räume 12 zugeführt. In der in Figur 1b dargestellten ersten Schaltstellung des 4/2-Wegeventils 14 erfolgt die Führung des Betriebsmittels über den Betriebsmittelführungskanal oder -Raum 9 am Außenumfang 7 des Turbinenrades 3 und von dort in den Bereich der Trennebene 11 im Bereich der radial äußeren Abmessung 10 der hydrodynamischen Kupplung 1, in den torusförmigen Arbeitsraum 4 hinein. Die hydrodynamische Kupplung wird bei Aufbau eines Kreislaufes dabei zentripedal durchströmt. Um eine sichere Funktionsweise zu gewährleisten und auch Möglichkeiten der Drucksteuerung nutzen zu können, sind beide Betriebsmittelführungskanäle - oder Räume gegeinander abgedichtet, d.h. druckdicht und flüssigkeitsdicht.

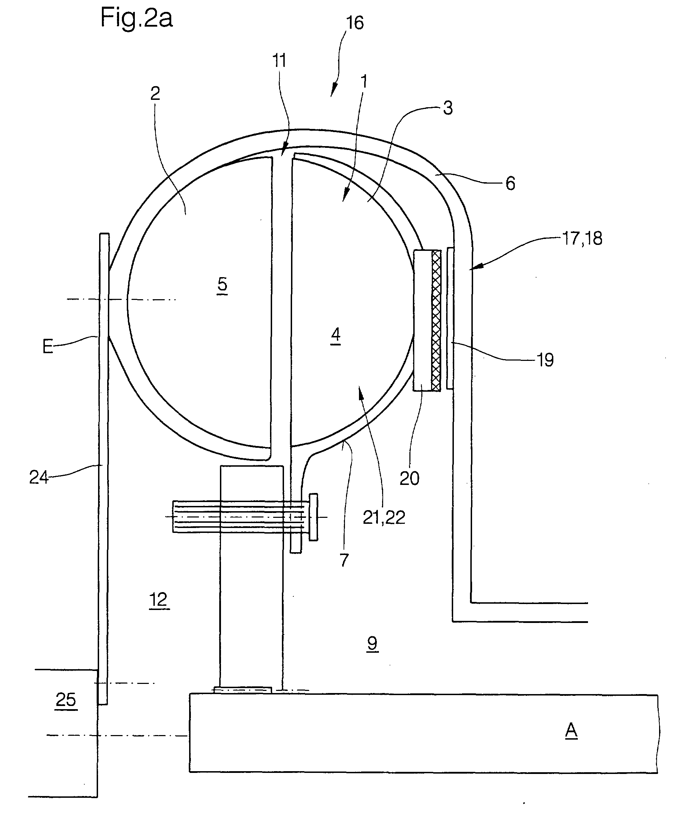

Die in den Figuren 1a und 1b dargestellte erfindungsgemäße Ausgestaltung einer hydrodynamischen Kupplung 1 stellt eine notwendige Voraussetzung zur Realisierung einer räumlich besonders platzsparenden Anordnung einzelner Elemente einer Anfahreinheit 16 gemäß Figur 2a dar. Die Figur 2a verdeutlicht dabei in schematisch stark vereinfachter Darstellung den Grundaufbau einer erfindungsgemäß gestalteten Anfahreinheit 16 mit einer erfindungsgemäß gestalteten hydrodynamischen Kupplung 1. Die Anfahreinheit umfaßt einen, mit einem Antrieb koppelbaren Eingang E und einen, mit nachgeschalteten Übersetzungsstufen oder einem Abtrieb koppelbaren Ausgang A. Die Anfahreinheit 16 umfaßt ein Anfahrelement in Form der hydrodynamischen Kupplung 1. Die Anfahreinheit 16 umfaßt ferner eine parallel zum Anfahrelement schaltbare Kupplung 17. Diese fungiert beim Einsatz in automatisierten Schaltgetrieben und beim Einsatz in Automatgetrieben immer oder hauptsächlich als Überbrückungskupplung 18. Unter Überbrückungskupplung wird dabei eine schaltbare Kupplungseinrichtung verstanden, welche in einem Antriebssystem mit mehreren Leistungszweigen eine Leistungsübertragung unter Umgehung eines Leistungszweiges ermöglicht. Die schaltbare Kupplung 17 umfaßt mindestens zwei miteinander reibschlüssig in Wirkverbindung bringbare Kupplungselemente, vorzugsweise in Form von Kupplungsscheiben - in Kraftflußrichtung zwischen dem Eingang E und dem Ausgang A der Anfahreinheit 1 betrachtet - eine erste Kupplungsscheibe 19, welche auch als Kupplungseingangsscheibe bezeichnet werden kann und eine zweite Kupplungsscheibe 20, die auch als Kupplungsausgangsscheibe bezeichnet wird. Eine Wirkverbindung durch Reibschluß zwischen der ersten Kupplungsscheibe 19 und der zweiten Kupplungsscheibe 20 kann dabei direkt oder indirekt realisiert werden. Im erstgenannten Fall wird dabei die Reibpaarung von der ersten Kupplungsscheibe 19 und der zweiten Kupplungsscheibe 20 direkt gebildet, während im zweiten Fall weitere Reibflächen tragende Elemente zwischengeschaltet werden. Das Pumpenrad 2 der hydrodynamischen Kupplung 1 umfaßt eine Pumpenradschale 6. Diese wird entweder von einem separaten Bauelement, welches drehfest mit dem Pumpenrad 2 gekoppelt ist, gebildet oder ist als integrale Baueinheit mit dem Pumpenrad 2 ausgeführt. Die Pumpenradschale 6 erstreckt sich dabei in Einbaulage in axialer Richtung im wesentlichen über die axiale Erstreckung des Turbinenrades 3 bzw. umschließt dieses zumindest teilweise auch in radialer Richtung. Vorzugsweise erfolgt das Umschließen des Turbinenrades 3 durch die Pumpenradschale 6 bzw. bei mehrteiliger Ausführung von deren Einzelteilen derart, daß diese sich in radialer Richtung bis in den Bereich des Ausganges A erstrecken. Das Turbinenrad 3 ist dabei direkt oder indirekt, d.h. über weitere Übertragungselemente mit dem Ausgang A der Anfahreinheit 16 verbunden. Die erste Kupplungsscheibe 19 ist dabei drehfest mit dem Eingang E und die zweite Kupplungsscheibe 20 drehfest mit dem Ausgang A der Anfahreinheit 16 verbunden. Im dargestellten Fall ist die erste Kupplungsscheibe 19 drehfest mit dem Pumpenrad 3, insbesondere der Pumpenradschale 6, gekoppelt, während die zweite Kupplungsscheibe 20 drehfest mit dem Turbinenrad 3 verbunden ist. Vorzugsweise erfolgt die Anordnung der schaltbaren Kupplung 17 in radialer Richtung in Bereich der radialen Erstreckung des torusförmigen Arbeitsraumes 4. Des weiteren sind Mittel 21 zur Erzeugung einer Anpreßkraft zur Realisierung einer reibschlüssigen Verbindung zwischen den einzelnen Kupplungselementen, insbesondere der ersten Kupplungsscheibe 19 und der zweiten Kupplungsscheibe 20, vorgesehen. Die Mittel 21 umfassen dabei vorzugsweise ein mit Druckmittel beaufschlagbares Kolbenelement 22, wobei die Funktion des Kolbenelementes 22 im dargestellten Fall vom Turbinenrad 3 übernommen wird. Das Turbinenrad 3 ist zu diesem Zweck entweder, wie in der Figur angedeutet, drehfest mit dem Ausgang A verbunden, jedoch in axialer Richtung verschiebbar ausgeführt oder die Anbindung an den Ausgang A erfolgt direkt drehfest, in Umfangsrichtung drehsteif und in axialer Richtung elastisch. Erkennbar sind ferner zumindest angedeutet in schematisch vereinfachter Darstellung die Betriebsmittel-Zuführkanäle oder Räume 12 und 9. Unmittelbar an der hydrodynamischen Kupplung 1 angeordnet, in der hydrodynamischen Kupplung 1 angeordnet oder dieser zugeordnet sind die Mittel 13 zur wahlweisen Änderung der Durchströmungsrichtung. Im dargestellten Fall wird dafür, wie in Figur 1 bereits beschrieben, eine 4/2-Wegeventileinrichtung 14 verwendet. Die 4/2-Wegeventileinrichtung ist dabei mit den Betriebsmittelführungskanälen oder Räumen 9 und 12 verbunden und steuert entsprechend seiner Stellung die Betriebsmittel-Durchströmrichtung durch die hydrodynamische Kupplung 1. Um während des Betriebes die Funktionsweise der hydrodynamischen Kupplung 1 und damit die Leistungsübertragung über den sich im torusförmigen Arbeitsraum 4 einstellenden Arbeitskreislauf zu gewährleisten, erfolgt die Betriebsmittelzufuhr zum Arbeitsraum 4 zentripedal, d.h. um den Außenumfang 7 des Turbinenrades 3 und damit zwischen den einzelnen Elementen der schaltbaren Kupplung 17, insbesondere der ersten Kupplungsscheibe 19 und der zweiten Kupplungsscheibe 20 hindurch. Die durch die Führung bei Zufuhr des Betriebsmittelstromes bedingte Gegenkraft ermöglicht während der Leistungsübertragung in der hydrodynamischen Kupplung 1 eine axiale Fixierung des Turbinenrades 3. Entfällt diese Gegenkraft durch Umlenkung bzw. Änderung der Zuführung des Betriebsmittelstromes zum Arbeitsraum 4, bewirkt das Betriebsmittel im torusförmigen Arbeitsraum 4 aufgrund des sich im Arbeitsraum 4 aufbauenden Druckes eine Axialkraft, die nicht mehr vom Turbinenrad 3 abgestützt wird, sondern zu einer Verschiebung des Turbinenrades 3 in axialer Richtung führt. Diese Verschiebung bewirkt dabei ein reibschlüssig miteinander in Wirkverbindung Bringen der beiden Kupplungsscheiben der schaltbaren Kupplungseinrichtung 17, so daß das Turbinenrad 3 mechanisch an das Pumpenrad 2 gekoppelt wird, wobei das mit einer Druckkraft beaufschlagte Kolbenelement 22 in der hydrodynamischen Kupplung 1 integriert ist und zwar vom Turbinenrad 3 gebildet wird. Dabei übernimmt der die zweite Kupplungsscheibe 20 tragende Teil des Turbinenrades 3 die Funktion des Kolbenelements 22 und das sich im torusförmigen Arbeitsraum befindliche Betriebsmittel die Funktion der Druckbeaufschlagung, bei einem Kolbenelement 22 die Funktion einer Druckkammer. In diesem Funktionszustand wird die hydrodynamische Kupplung zentrifugal durchströmt.

Bei der in der Figur 2a dargestellten Ausführung der Anfahreinheit 16 handelt es sich um eine besonders vorteilhafte Anordnung der einzelnen Elemente - Pumpenrad 2 und Turbinenrad 3 - der hydrodynamischen Kupplung 1. Bei dieser sind in Kraftübertragungsrichtung zwischen dem Eingang E und dem Ausgang A der Anfahreinheit 1 das Turbinenrad 3 räumlich in axialer Richtung hinter dem Pumpenrad bzw. neben diesem angeordnet, während das Pumpenrad 2 räumlich zwischen dem Eingang E und dem Turbinenrad 3 angeordnet ist. Aufgrund der Integration der Mittel 21 zur Erzeugung einer Anpreßkraft zur Realisierung einer reibschlüssigen Verbindung der einzelnen Elemente der schaltbaren Kupplung 17, welche im dargestellten Fall als Überbrückungskupplung fungiert, in die hydrodynamische Kupplung 1, kann die Anzahl der erforderlichen Bauelemente auf ein Minimum reduziert werden, da keine zusätzlichen separaten Einrichtungen zur Erzeugung bzw. Bereitstellung der Anpreßkraft für die einzelnen Elemente, insbesondere die erste Kupplungsscheibe 19 und die zweite Kupplungsscheibe 20, der schaltbaren Kupplung 17 erforderlich sind. Ein weiterer erheblicher Vorteil besteht aufgrund der integrierten Ausführung in der sehr kurzen axialen Baulänge. Diese kann bei optimierten Schaufelrädern mit der erfindungsgemäßen Lösung gegenüber den Ausführungen im Stand der Technik noch weiter verkürzt werden.

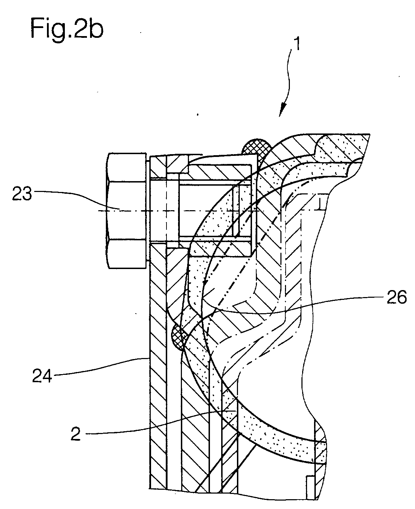

Unter einem weiteren Aspekt der für die Verkürzung erforderlichen axialen Bauraumes erfolgt gemäß einer vorteilhaften Weiterentwicklung einer Lösung gemäß Figur 2b die Anbindung des Pumpenrades 2 an den Antrieb E mittels Befestigungselementen 23, wobei der Antrieb hier über die Kopplung sogenannter Flexplate 24 mit einer Kurbelwelle 25 einer im einzelnen nicht dargestellten Antriebsmaschine erfolgt, d.h. in axialer Richtung mit nachgiebig und in Umfangsrichtung drehsteif ausgeführten Membranen. Zur Reduzierung der axialen Baulänge ist es des weiteren vorgesehen, daß die Befestigungselemente 23 sich teilweise bis in den Schaufelgrund 26 des Pumpenrades 2 erstrecken. Dies wird anhand eines Details aus einer konstruktiven Ausführung einer Anfahreinheit 16 gemäß Figur 2a in der Figur 2b verdeutlicht. Aufgrund der drehfesten Anbindung zwischen dem Antrieb bzw. dem Eingang E und dem Pumpenrad 2 besteht keinerlei Relativbewegung zwischen den Befestigungselementen 23 und dem Pumpenrad 2, insbesondere dem Schaufelgrund 26 des Pumpenrades 2. Eine Störung der während des Betriebes sich einstellenden Meridianströmung im torusförmigen Arbeitsraum 4 bzw. eine Beeinflussung dessen erfolgt nicht. Diese Art der Erstreckung der Befestigungselemente 23 in den Schaufelgrund 26 ist dabei anhand eines Ausschnittes aus der erfindungsgemäß gestalteten Anfahreinheit 16 gemäß Figur 2a in der Figur 2b dargestellt.

Vorzugsweise ist gemäß Figur 2a die zweite Kupplungsscheibe 20 an der Rückseite, d.h. dem Außenumfang 7 des Turbinenrades 3 angeordnet. Die Anordnung erfolgt dabei vorzugsweise parallel zur Trennebene 11 zwischen dem Pumpenrad 2 und dem Turbinenrad 3, vorzugsweise im Bereich zwischen den Abmessungen des inneren Durchmessers 27 und des äußeren Durchmessers 28 des torusförmigen Arbeitsraumes 4. Dabei wird die zweite Kupplungsscheibe 20 vorzugsweise direkt vom Turbinenrad gebildet, wobei die Reibfläche von einem auf die Außenfläche des Sekundärrades 3 aufgebrachten Belag erzeugt werden kann.

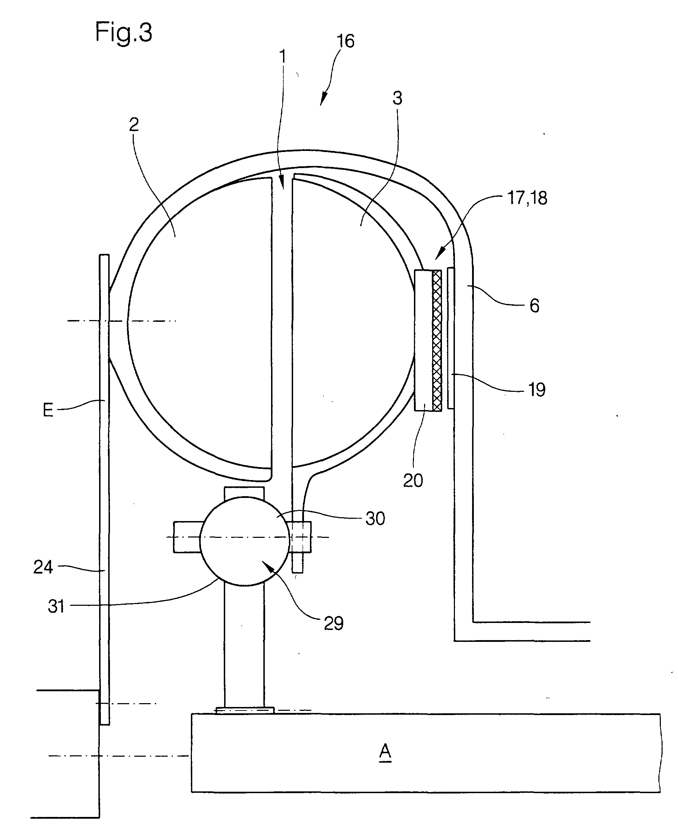

Unter einem weiteren Aspekt der Erfindung umfaßt die Anfahreinheit 16 gemäß Figur 3 eine Vorrichtung zur Dämpfung von Schwingungen 29, insbesondere einen Torsionsschwingungsdämpfer. Dieser kann vielgestaltig ausgeführt sein. Im einfachsten Fall ist dieser als einfache Reibdämpfungseinrichtung ausgeführt. Es sind jedoch auch Ausführungen mit hydraulischer Dämpfung denkbar. Bezüglich der konkreten Ausgestaltung einer derartigen Vorrichtung zur Dämpfung von Schwingungen 29 kann auf die aus dem Stand der Technik bekannten Ausführungen verwiesen werden. Die konkrete Auswahl liegt dabei im Ermessen des zuständigen Fachmannes. In besonders vorteilhafter Weise sind dabei das hydrodynamische Bauelement, die hydrodynamische Kupplung 1, die schaltbare Kupplung 17 und die Vorrichtung 29 zur Dämpfung von Schwingungen in Reihe geschaltet. Die Vorrichtung zur Dämpfung von Schwingungen 29 umfaßt dabei ein Primärteil 30, welches drehfest mit dem Turbinenrad 3 verbunden ist und damit der zweiten Kupplungsscheibe 20 und ein Sekundärteil 31, welches drehfest mit dem Ausgang A gekoppelt ist. Zwischen Primärteil 30 und Sekundärteil 31 sind Mittel zur Dämpfungs- und/oder Federkopplung vorgesehen. Die Vorrichtung zur Dämpfung von Schwingungen 29 ist je nach Leistungsübertragungszweig bei der Leistungsübertragung über die hydrodynamische Kupplung 1 zwischen der hydrodynamischen Kupplung 1, insbesondere dem Turbinenrad 3 und dem Ausgang A angeordnet, des weiteren bei Leistungsübertragung über die schaltbare Kupplung 17 zwischen der schaltbaren Kupplung 17, insbesondere dem durch die zweite Kupplungsscheibe 20 gebildeten Ausgang und dem Ausgang A der Anfahreinheit 16. In beiden Fällen ist die Vorrichtung 29 zur Dämpfung von Schwingungen dem jeweils leistungsübertragenden Element - hydrodynamische Kupplung 1 oder schaltbare Kupplung 17 - in Reihe nachgeschaltet. Auch bei gleichzeitigem Betrieb von hydrodynamischer Kupplung 1 und schaltbarer Kupplung 17, d.h. Leistungsübertragung über zwei Leistungszweige - Übertragung eines ersten Leistungsanteiles der Gesamtleistung über die hydrodynamische Kupplung und Übertragung des zweiten Leistungsanteiles über die schaltbare Kupplung 17 - ist der Torsionsschwingungsdämpfer den beiden Leistungszweige in Reihe nachgeschaltet. Der übrige Grundaufbau der Anfahreinheit entspricht dem in der Figur 2a beschriebenen. Für gleiche Elemente werden dabei die gleichen Bezugszeichen verwendet.

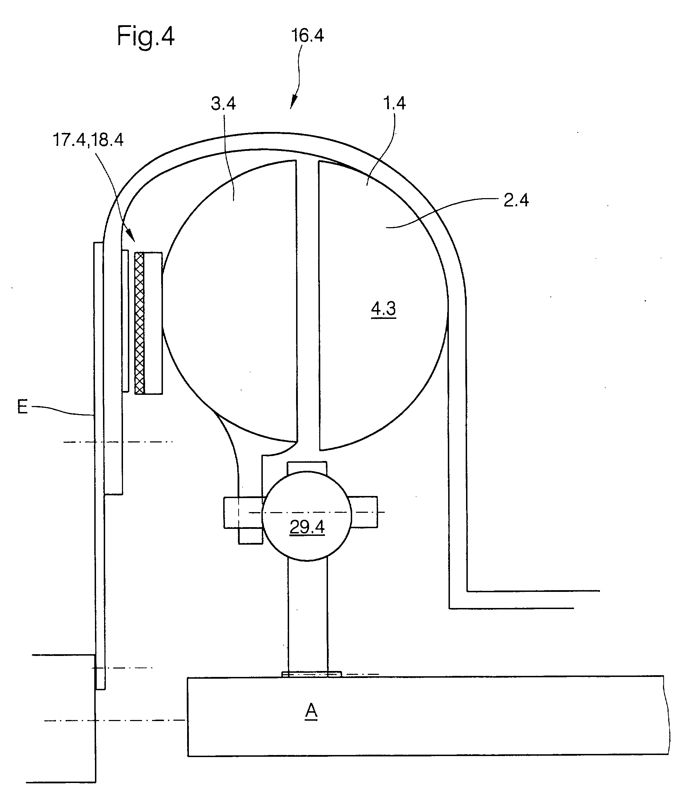

Die Figur 4 verdeutlicht in schematisch vereinfachter Darstellung eine weitere Ausgestaltung einer erfindungsgemäß gestalteten Anfahreinheit 16.4 mit einem Anfahrelement 17.4 in Form einer hydrodynamischen Kupplung 1.4. Die hydrodynamische Kupplung 1.4 umfaßt auch hier ein Primärrad 2.4 und ein Sekundärrad 3.4, welche miteinander einen torusförmigen Arbeitsraum 4.4 bilden. Des weiteren ist auch hier eine schaltbare Kupplung 17.4 vorgesehen, welche parallel zur hydrodynamischen Kupplung schaltbar ist. Die Grundfunktion entspricht der in den Figuren 2 und 3 beschriebenen. Für gleiche Elemente werden dabei auch die gleichen Bezugszeichen verwendet. Im Unterschied zur Ausführung gemäß Figur 2 und 3 ist jedoch das Turbinenrad 3.4 räumlich in axialer Richtung betrachtet zwischen dem Eingang E und dem Pumpenrad 2.4 angeordnet, d.h. das Pumpenrad 2.4 ist entgegen den Ausführungen der vorangegangenen Figuren nicht auf der Motorseite, sondern auf der Motorabtriebsseite angeordnet. Die Kopplung zwischen einem Antrieb, insbesondere dem Eingang E der Anfahreinheit 16.4 und dem Pumpenrad 2.4 erfolgt dabei unter Umschließung des Sekundärrades 3.4 in axialer Richtung, wobei die Anbindung des Turbinenrades 3.4 an den Abtrieb über den Ausgang A in radialer Richtung innerhalb des Zwischenraumes der Kopplung zwischen Eingang E und Pumpenrad 2.4 erfolgt und räumlich betrachtet zwischen Eingang E und Ausgang A der Anfahreinheit vor der Kopplung zwischen dem Eingang E und dem Pumpenrad 2.4.

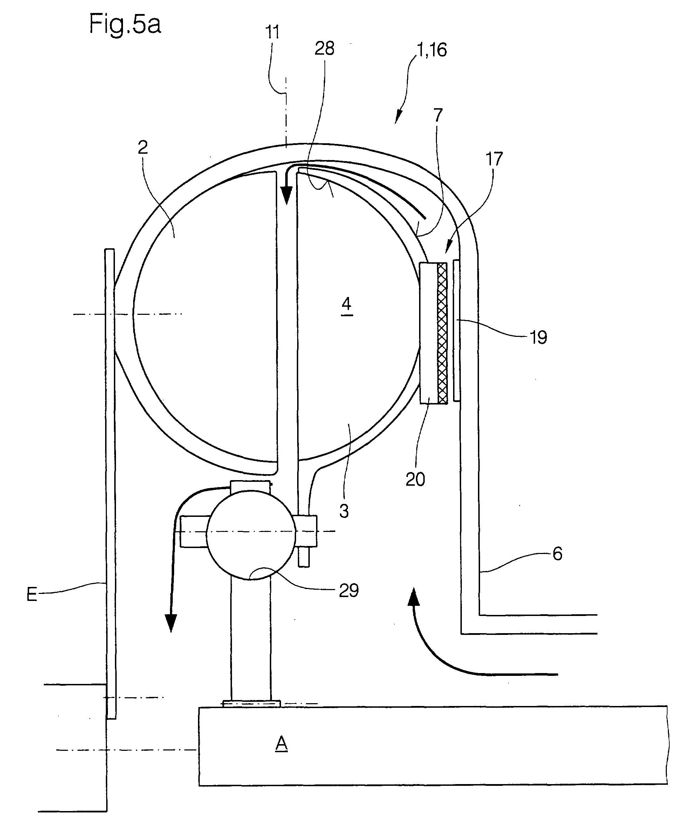

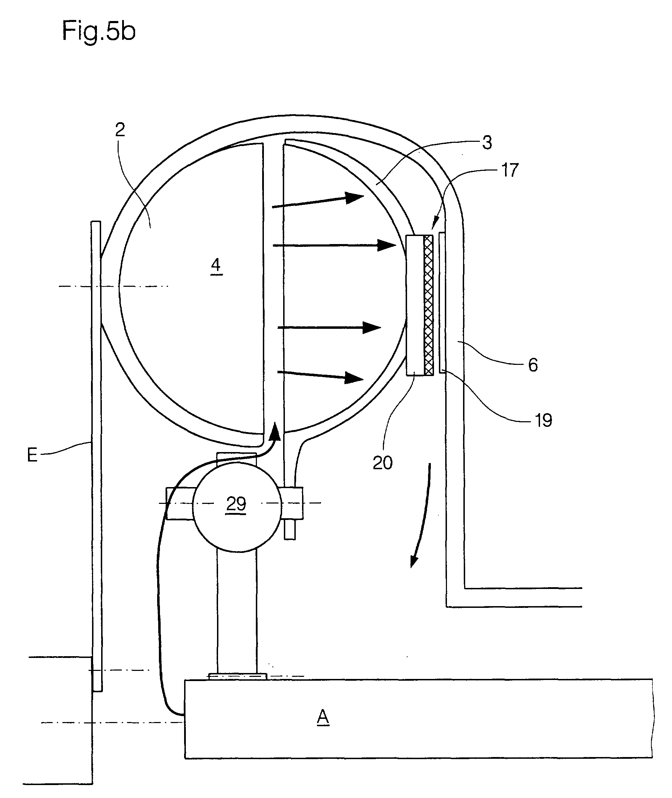

Die Figuren 5a und 5b verdeutlichen anhand einer Ausführung gemäß Figur 3 die Funktionsweise der erfindungsgemäß gestalteten Anfahreinheit 16. Für gleiche Elemente werden die gleichen Bezugszeichen verwendet. Figur 5a verdeutlicht dabei die Betriebsmittelzufuhr zum Arbeitsraum 4 während des hydrodynamischen Betriebes, d.h. Leistungsübertragung über die hydrodynamische Kupplung 1 um den Außenumfang 7 des Turbinenrades 3 zur Trennebene 11 zwischen Pumpen- und Turbinenrad im Bereich des äußeren Durchmessers 28 des torusförmigen Arbeitsraumes 4 und von dort in den Arbeitsraum 4. Die hydrodynamische Kupplung 1 wird in diesem Zustand zentripedal durchströmt.

Die Figur 5b verdeutlicht demgegenüber die geänderte Betriebsmittelführung bei Umschaltung auf die schaltbare Kupplung 17 zum Turbinenrad 3 im Bereich des Innenumfanges des Arbeitsraumes 4 zum Zwecke des Druckaufbaus am Schaufelgrund des Turbinenrades 3 zum inneren Durchmesser des torusförmigen Arbeitsraumes 4. In diesem Funktionszustand wird die hydrodynamische Kupplung 1 zentrifugal durchströmt.

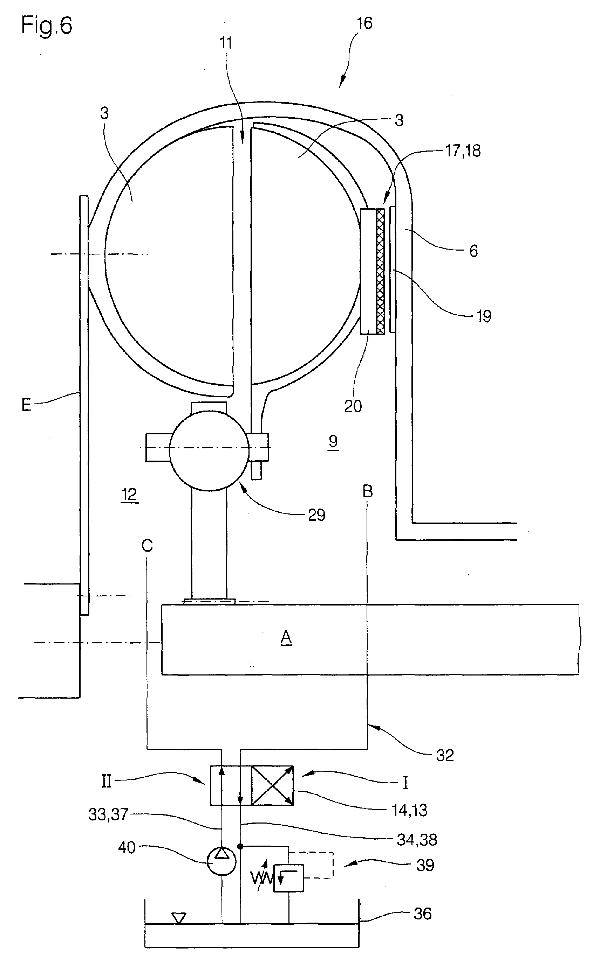

Die Figur 6 verdeutlicht anhand einer vorteilhaften Weiterentwicklung die Möglichkeit, mittels Drucksteuerung auch die Leistungsaufnahme der hydrodynamischen Kupplung 1 sowohl direkt als auch indirekt zu steuern.

Zu diesem Zweck sind bei einer Ausführung der Anfahreinheiten 1 gemäß Figur 2 und 3 den mittels einer im einzelnen nicht dargestellten Dichtung gegeneinander abgedichteten Betriebsmittel-Führungskanälen oder Räumen 9 und 12 entsprechende Anschlüsse B und C zugeordnet. Die Führung des Betriebsmittels erfolgt außerhalb des torusförmigen Arbeitsraumes 4 zum Zwecke der Kühlung über einen offenen Kreislauf 32.

Die Änderung der Durchströmung der hydrodynamischen Kupplung 1, wie in den Figuren 1 und 5 dargestellt, erfolgt beispielsweise ebenfalls über eine Ventileinrichtung 14, die die Zuordnung der einzelnen Betriebsmittel-Strömungskanäle oder Leitungen zum Zulauf und Ablauf entsprechend der Schaltstellung festlegen. Im dargestellten Fall sind Zulauf und Ablauf jeweils mit 33 und 34 bezeichnet, wobei deren Ankoppelung an die Betriebsmittelführungskanäle und Räume beliebig erfolgen kann. In einer ersten, hier nicht dargestellten Funktionsstellung I der Ventileinrichtung 14 fungiert der mit 34 dargestellte Anschluß als Zulauf und der mit 33 dargestellte Anschluß als Rücklauf. Der mit 34 dargestellte Anschluß ist dabei mit im einzelnen nicht dargestellten Kanälen zur Führung des Betriebsmittels um den Außenumfang 7 des Turbinenrades 3 gekoppelt. In diesem Zustand dient der gekoppelte Betriebsmittelstrom bei Führung zwischen den einzelnen miteinander reibschlüssig in Verbindung zu bringenden Kupplungsscheiben 19 und 20 einer Deaktivierung der als Überbrückungskupplung ausgeführten schaltbaren Kupplung 17. Die hydrodynamische Kupplung 1 wird in diesem Zustand zentripedal durchströmt. Dies bedeutet, eine Strömungsrichtung zur Mitte, in die Mitte des im torusförmigen Arbeitsraum 4 sich einstellenden Arbeitskreislaufes 35. Der Anschluß C dient in diesem Fall dem Ablauf mit Betriebsmittel aus dem torusförmigen Arbeitsraum 4. In der zweiten, in Figur 6 dargestellten Funktionsstellung II der 4/2-Wegeventiieinrichtung 14 fungiert der mit B bezeichnete Anschluß als Ablauf und der mit C bezeichnete Anschluß als Zulauf. In diesem Fall wird das Betriebsmittel zentrifugal aus Richtung der Rotationsachse in den torusförmigen Arbeitsraum 4 eingeführt und bewirkt die in der Figur 5b dargestellte Funktion. Das Turbinenrad 3 der hydrodynamischen Kupplung 1 fungiert als Kolbenelement für die miteinander reibschlüssig in Verbindung bringbaren Kupplungsscheiben 19 und 20 der schaltbaren Kupplung 17. Der offene Kreislauf 32 beinhaltet einen Behälter 36. Mit diesem gekoppelt sind eine Speiseleitung 37 und eine Rückführleitung 38, welche über die Ventileinrichtung 14 wahlweise an die einzelnen Betriebsmittel-Führungskanäle oder -räume 9 und 12 ankoppelbar sind. Die Speiseleitung 37 ist dem Anschluß C zugeordnet, die Rückführleitung 38 bildet den Anschluß B. Zur Drucksteuerung ist in der Rückführleitung 38 ein steuerbares Druckbegrenzungsventil 39 vorgesehen, welches den Druck in der Rückführleitung 38 auf einen bestimmten Wert begrenzen kann. Zur Versorgung mit Betriebsmittel ist des weiteren eine Fördereinrichtung 40 vorgesehen. Damit wird es möglich, die Leistungsübertragung auch gleichzeitig über die schaltbare Kupplung 17 und die hydrodynamische Kupplung 1 erfolgen zu lassen. Über den Differenzdruck zwischen den beiden Anschlüssen B und C wird dabei die Leistungsübertragung für die schaltbare Kupplung 17 direkt gesteuert und somit indirekt auch über den hydrodynamischen Zweig, d.h. die hydrodynamische Kupplung 1. Über den Absolutdruck kann die Leistungsübertragung über die hydrodynamische Kupplung verändert werden.

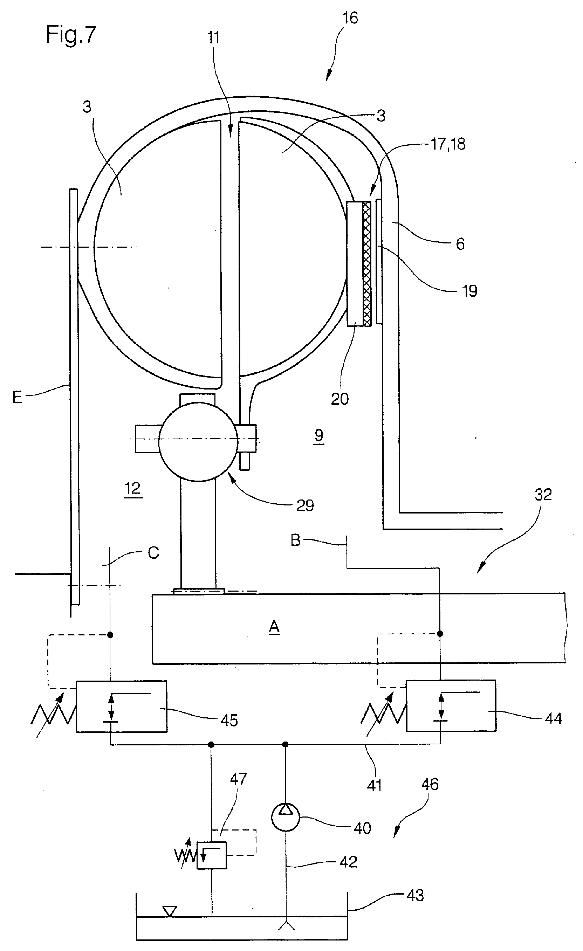

Eine andere Möglichkeit gemäß Figur 7 besteht darin, dem Zulauf zum torusförmigen Arbeitsraum 4 und dem Ablauf vom torusförmigen Arbeitsraum 4 direkt Mittel zur Steuerung des Druckes zuzuordnen. In diesem Fall sind der Zulauf und der Ablauf B bzw. C vom torusförmigen Arbeitsraum 4 über eine Verbindungsleitung 41 miteinander gekoppelt, welche über eine weitere Verbindungsleitung 42 mit einem Betriebsmittelbehälter 43 gekoppelt ist. Die Steuerung des Füllungsgrades im torusförmigen Arbeitsraum 4 der hydrodynamischen Kupplung 1 kann dabei durch Änderung des Absolutdruckes p_{absolut} im torusförmigen Arbeitsraum 4 erfolgen. Zu diesem Zweck sind dabei den einzelnen Anschlüssen B und C jeweils steuerbare Ventileinrichtungen 44 und 45 zur Steuerung der Drücke im Zulauf und Rücklauf - je nach Zuordnung der einzelnen Anschlüsse B und C als Zufuhr- oder Ablaufleitung - zugeordnet. Im einfachsten Fall sind diese, wie in dieser Figur dargestellt, als unabhängig voneinander steuerbare Druckregelventileinrichtungen ausgeführt. Die Verbindungsleitungen 41 und 42 sowie die Anschlüsse B und C und der Betriebsmittelbehälter 43 bilden ein Betriebsmittelversorgungssystem 46. Zur Vemeidung von Fördervorgängen gegen den Widerstand der Ventileinrichtungen 45 und 46 ist vorzugsweise in der Verbindungsleitung 41 ein Druckentlastungsventil 47 vorgesehen.

Mittels der Druckregelventile werden durch die in den Betriebsmittelkanälen bzw. Räumen 9 und 12 einzustellenden Druckwerte sowohl die Strömungsrichtung und die übertragbare Leistung in der hydrodynamischen Kupplung festgelegt. Zusätzlich sind die über jede Kupplung - hydroydanamische Kupplung 1 und schaltbare Kupplung 17 - übertragbaren Leistungsanteile einzeln oder gemeinsam steuerbar. Ein erster Leistungsanteil wird dabei bei parallelem Betrieb von hydrodynamischer Kupplung 1 und schaltbarer Kupplung 17 über einen ersten Leistungszweig übertragen, in welchem die hydrodynamische Kupplung 1 angeordnet ist. Ein zweiter Leistungsanteil wird über einen zweiten Leistungszweig übertragen, in welchem die schaltbare Kupplung 17 angeordnet ist. Die Steuerung des ersten Leistungsanteiles erfolgt über die Steuerung des Absolutdruckes in der hydrodynamischen Kupplung 1. Als Stellgröße diesbezüglich fungiert der am Betriebsmittelzufuhrkanal- oder Raum 12 über den Anschluß C anliegende Druck. Die Steuerung des zweiten Leistungsanteiles wird über den an den Anschlüssen B und C angelegten Differenzdruck realisiert.

### Bezugszeichenliste

- 1: hydrodynamische Kupplung
- 2: Pumpenrad
- 3: Turbinenrad
- 4: torusförmiger Arbeitsraum
- 5: Arbeitskreislauf
- 6: Pumpenradschale
- 7: Außenumfang des Turbinenrades
- 8: Innenkontur
- 9: Betriebsmittel-Führungskanal oder -Raum
- 10: radial äußere Abmessungen der hydrodynamischn Kupplung
- 11: Trennebene
- 12: Betriebsmittel-Führungskanal oder -Raum
- 13: Mittel zur wahlweisen Änderung der Durchströmungsrichtung
- 14: 4/2-Wegeventileinrichtung
- 15: Innenumfang
- 16: Anfahreinheit
- 17: schaltbare Kupplung
- 18: Überbrückungskupplung
- 19: erste Kupplungsscheibe
- 20: zweite Kupplungsscheibe
- 21: Mittel zur Erzeugung einer Anpreßkraft
- 22: Kolbenelement
- 23: Befestigungselemente
- 24: Flexplates
- 25: Kurbelwelle
- 26: Schaufelgrund
- 27: innerer Durchmesser
- 28: äußerer Durchmesser
- 29: Vorrichtung zur Dämpfung von Schwingungen
- 30: Primärteil
- 31: Sekundärteil
- 32: offenes System
- 33: Zulauf
- 34: Ablauf
- 35: Arbeitskreislauf
- 36: Behälter
- 37: Speiseleitung
- 38: Rückführleitung
- 39: Druckbegrenzungsventil
- 40: Fördereinrichtung
- 41: Verbindungsleitung
- 42: Verbindungsleitung
- 43: Behälter
- 44: Druckregelventil
- 45: Druckregelventil
- 46: Betriebsmittelversorgungssystem
- 47: Druckentlastungseinrichtung
- A: Ausgang der Anfahreinheit
- B: Anschluß
- C: Anschluß
- E: Eingang der Anfahreinheit

## Patentansprüche

1. Hydrodynamische Kupplung (1; 1.4)
1.1 mit zwei Schaufelrädern - einem Pumpenrad (2; 2.4) und einem Turbinenrad (3; 3.4) - die miteinander einen torusförmigen Arbeitsraum (4; 4.4) bilden;
1.2 mit einer drehfest mit dem Pumpenrad (2; 2.4) gekoppelten Pumpenradschale (6; 6.4), welche das Turbinenrad (3; 3.4) in axialer Richtung unter Bildung eines ersten Betriebsmittelführungskanales-oder Raumes (9; 9.4) umschließt;
1.3 mit einem zweiten Betriebsmittelführungskanal- oder Raum (12; 12.4), welcher im Bereich des Innendurchmessers des torusförmigen Arbeitsraumes (6; 6.4) oder unterhalb dessen mündet;
1.4 der erste und zweite Betriebsmittelführungskanal- oder Raum (12; 12.4) sind wahlweise jeweils als Zufuhr-oder Ablaufkanal- oder Raum zum oder vom torusförmigen Arbeitsraum (4; 4.4) nutzbar.

2. Hydrodynamische Kupplung (1; 1.4) nach Anspruch 1, **dadurch gekennzeichnet, daß** die beiden Schaufelräder (2; 2.4; 3; 3.4) hinsichtlich ihrer Größe mit einem geringen Versatz zueinander in radialer Richtung ausgeführt sind.

3. Hydrodynamische Kupplung (1; 1.4) nach einem der Ansprüche 1 oder 2, **dadurch gekennzeichnet, daß** die Anordnung des zweiten Betriebsmittelführungskanales-oder Raumes ( 12; 12.4) wenigstens in der Pumpenrad - oder Turbinenradwelle erfolgt.

4. Hydrodynamische Kupplung (1; 1.4) nach einem der Ansprüche 1 bis 3, **dadurch gekennzeichnet, daß** der erste und zweite Betriebsmittelführungskanal- oder Raum (9, 12; 9.4, 12.4) druckdicht gegeneinander abgedichtet sind.

5. Betriebsmittelsystem (46) für eine hydrodynamische Kupplung (1; 1.4) nach einem der Ansprüche 1 bis 4;
5.1 mit einer Betriebsmittelversorgungsquelle (40; 43; 36);
5.2 mit einem ersten Anschluß (B) zur Kopplung mit dem ersten Betriebsmittelführungskanal-oder Raum (9; 9.4);
5.3 mit einem zweiten Anschluß (C) zur Kopplung mit dem zweiten Betriebsmittelführungskanal-oder Raum (12; 12.4);
5.4 mit Mitteln (14,13) zur wahlweisen Änderung der Durchströmungsrichtung der hydrodynamischen Kupplung (1; 1.4) durch Zuweisung der Funktion des Zulaufes oder des Ablaufes zu den beiden Betriebsmittelversorgungskanälen -oder Räumen (9, 12; 9.4, 12.4).

6. Betriebsmittelversorgungssystem (46) nach Anspruch 5, **gekennzeichnet durch** die folgenden Merkmale:
6.1 die Mittel (14) umfassen eine Ventileinrichtung (13) mit wenigstens zwei Schaltstellungen (I, II);
6.2 eine erste Schaltstellung (I) ist **durch** die Kopplung zwischen Zulauf und erstem Betriebsmittelführungskanal-oder Raum (9, 9.4) und Ablauf und zweitem Betriebsmittelführungskanal- oder Raum (12; 12.4) charakterisiert;
6.3 eine zweite Schaltstellung (II) ist **durch** die Kopplung zwischen Zulauf und zweitem Betriebsmittelführungskanal-oder Raum (12; 12.4) und Ablauf und erstem Betriebsmittelführungskanal- oder Raum (9; 9.4) charakterisiert.

7. Betriebsmittelversorgungssystem (46) nach Anspruch 6, **gekennzeichnet durch** die folgenden Merkmale:
7.1 Zulauf und Ablauf sind über einen offenen Kreislauf (32) miteinander verbunden, umfassend eine Betriebsmittelversorgungs- oder speichereinheit (36, 43);
7.3 mit Mitteln zur Steuerung der übertragbaren Leistungsanteile über die hydrodynamische Kupplung und die schaltbare Kupplung.

8. Betriebsmittelversorgungssystem (46) nach Anspruch 7, **dadurch gekennzeichnet, daß** die Mittel zur Steuerung der übertragbaren Leistungsanteile über die hydrodynamische Kupplung (1; 1.4) und die schaltbare Kupplung (17; 17.4) die Mittel (14, 14.4) zur wahlweisen Änderung der Durchströmungsrichtung der hydrodynamischen Kupplung durch Zuweisung der Funktion des Zulaufes oder des Ablaufes zu den beiden Betriebsmittelversorgungskanälen -oder Räumen (9, 12; 9.4, 12.4) jeweils eine dem einzelnen Betriebsmittelführungskanal- oder Raum (9, 12; 9.4, 12.4) und eine Ventileinrichtung (39) zur Steuerung des Druckes in mindestens einem Betriebsmittelführungskanal- bzw. Raum, umfassen.

9. Betriebsmittelversorgungssystem (46) nach Anspruch 5, **dadurch gekennzeichnet, daß** die Mittel zur Steuerung der übertragbaren Leistungsanteile und die Mittel zur wahlweisen Änderung der Durchströmungsrichtung der hydrodynamischen Kupplung durch Zuweisung der Funktion des Zulaufes oder des Ablaufes zu den beiden Betriebsmittelversorgungskanälen -oder Räumen von jeweils einer dem einzelnen Betriebsmittelführungskanal - oder Raum (9, 12; 9.4, 12.4) zugeordneten und separat steuerbaren Ventileinreichtung (44, 45) gebildet werden.

10. Betriebsmittelversorgungseinrichtung (46) nach Anspruch 9, **dadurch gekennzeichnet, daß** die steuerbaren Ventileinrichtungen (44, 45) als Druckregelventileinrichtungen ausgeführt sind.

11. Anfahreinheit (16, 16.4)
11.1 mit einem mit einem Antrieb koppelbaren Eingang (E) und einem mit dem Abtrieb koppelbaren Ausgang (A);
11.2 mit einem Anfahrelement in Form einer hydrodynamischen Kupplung (1; 1.4) gemäß einem der Ansprüche 1 bis 4;
11.3 mit einer schaltbaren Kupplung (17, 17.4), umfassend wenigstens zwei miteinander direkt oder indirekt über weitere Übertragungsmittel reibschlüssig in Wirkverbindung bringbare Kupplungsscheiben - eine erste Kupplungsscheibe (19) und eine zweite Kupplungsscheibe (20), die jeweils mit dem Eingang (E) und dem Ausgang (A) gekoppelt sind.

12. Anfahreinheit (16; 16.4) nach Anspruch 11, **dadurch gekennzeichnet, daß** Mittel (21) zur Erzeugung einer Anpreßkraft zur Realisierung einer wenigstens mittelbaren reibschlüssigen Verbindung zwischen erster Kupplungsscheibe (19) und zweiter Kupplungsscheibe (20) vorgesehen sind.

13. Anfahreinheit (16; 16.4)nach einem der Ansprüche 11 oder 12, **dadurch gekennzeichnet, daß** die erste Kupplungsscheibe (19) drehfest mit der Pumpenradschale (6, 6.4) und die zweite Kupplungsscheibe (20) drehfest mit dem Turbinenrad (3; 3.4) verbunden ist und die Mittel (21) zur Realisierung einer wenigstens mittelbaren reibschlüssigen Verbindung zwischen erster Kupplungsscheibe (19) und zweiter Kupplungsscheibe (20) mindestens ein mit Druckmittel beaufschlagbares Kolbenelement (22) umfassen.

14. Anfahreinheit (16; 16.4) nach einem der Ansprüche 11 bis 13, **gekennzeichnet durch** die folgenden Merkmale:
14.1 das Turbinenrad (3, 3.4) ist drehfest jedoch in axialer Richtung verschiebbar mit dem Ausgang (A) der Anfahreinheit (16; 16.4) verbunden;
14.2 das Kolbenelement (22) wird vom Turbinenrad (3, 3.4) gebildet;
14.3 eine mit Druckmittel befüllbare Kammer zur Beaufschlagung des Kolbenelementes (22) wird vom torusförmigen Arbeitsraum (4, 4.4) gebildet.

15. Anfahreinheit (16; 16.4) nach Anspruch 11 bis 13, **gekennzeichnet durch** die folgenden Merkmale:
15.1 das Turbinenrad (3, 3.4) ist drehfest mit dem Ausgang (A) verbunden, wobei die Kopplung drehsteif in Umfangsrichtung jedoch elastisch in axialer Richtung ausgeführt ist;
15.2 das Kolbenelement (22) wird vom Turbinenrad (3, 3.4) gebildet;
15.3 eine mit Druckmittel befüllbare Kammer zur Beaufschlagung des Kolbenelementes wird vom torusförmigen Arbeitsraum (4; 4.4) gebildet.

16. Anfahreinheit (16, 16.4) nach einem der Ansprüche 11 bis 15, **gekennzeichnet durch** die folgenden Merkmale:
16.1 die erste Kupplungsscheibe (19) und/oder die zweite Kupplungsscheibe (20) sind einteilig mit der Pumpenradschale (6; 6.4) und/oder dem Turbinenrad (3, 3.4) ausgeführt;
16.2 die Pumpenradschale (6; 6.4) und/oder das Turbinenrad (3, 3.4) sind mit einem Reibbelag beschichtet.

17. Anfahreinheit (16; 16.4) nach einem der Ansprüche 11 bis 15, **gekennzeichnet durch** die folgenden Merkmale:
17.1 die erste Kupplungsscheibe (19) und/oder die zweite Kupplungsscheibe (20) sind als separates Bauelement ausgeführt, welche drehfest mit der Pumpenradschale (6; 6.4) und/oder dem Turbinenrad (3, 3.4) verbunden sind;
17.2 die Reibfläche wird vom separaten Bauelement oder einem auf diesem aufgetragenen Reibbelag gebildet.

18. Anfahreinheit (16; 16.4) nach einem der Ansprüche 11 bis 17, **dadurch gekennzeichnet, daß** die zweite Kupplungsscheibe (20) an der Rückseite des Turbinenrades (3; 3.4) angeordnet ist.

19. Anfahreinheit (16; 16.4) nach Anspruch 18, **dadurch gekennzeichnet, daß** die zweite Kupplungsscheibe (20) in radialer Richtung in einem Bereich zwischen dem äußeren Durchmesser und dem inneren Durchmesser des torusförmigen Arbeitsraumes (4; 4.4) angeordnet ist.

20. Anfahreinheit (16; 16.4) nach einem der Ansprüche 11 bis 19, **dadurch gekennzeichnet, daß** die erste Kupplungsscheibe (19) und die zweite Kupplungsscheibe (20) parallel zur Trennebene (11) zwischen dem Pumpenrad (2; 2.4) und dem Turbinenrad (3; 3.4) ausgerichtet ist.

21. Anfahreinheit (16; 16.4) **gekennzeichnet durch** die folgenden Merkmale:
21.1 mit einer Vorrichtung (29; 29.4) zur Dämpfung von Schwingungen, insbesondere einem Torsionsschwingungsdämpfer;
21.2 die Vorrichtung (29; 29.4) zur Dämpfung von Schwingungen ist in Reihe mit der hydrodynamischen Kupplung (1; 1.4) und der schaltbaren Kupplung (17; 17.4) geschaltet.

22. Anfahreinheit (16; 16.4) nach Anspruch 21, **dadurch gekennzeichnet, daß** die Vorrichtung (29; 29.4) zur Dämpfung von Schwingungen zwischen dem Turbinenrad (3; 3.4) und dem Ausgang (A) angeordnet ist.

23. Anfahreinheit (16; 16.4) nach einem der Ansprüche 21 oder 22, **dadurch gekennzeichnet, daß** die Vorrichtung (29; 29.4) zur Dämpfung von Schwingungen als Reibdämpfungseinrichtung ausgeführt ist.

24. Anfahreinheit (16; 16.4) nach einem der Ansprüche 21 oder 22, **dadurch gekennzeichnet, daß** die Vorrichtung (29; 29.4) zur Dämpfung von Schwingungen als hydraulische Dämpfungseinrichtung ausgeführt ist.

25. Anfahreinheit (16; 16.4) nach Anspruch 24, **gekennzeichnet durch** die folgenden Merkmale:
25.1 die Vorrichtung (29; 29.4) zur Dämpfung von Schwingungen (22) umfaßt ein Primärteil (30) und eine Sekundärteil (31), welche in Umfangsrichtung drehfest miteinander gekoppelt jedoch begrenzt gegeneinander verdrehbar sind;
25.2 zwischen dem Primärteil (30) und dem Sekundärteil (31) sind Mittel zur Dämpfungs- und/oder Federkopplung angeordnet.

26. Anfahreinheit (6.4) nach einem der Ansprüche 11 bis 25, **dadurch gekennzeichnet, daß** das Turbinenrad (3.4) räumlich zwischen dem Eingang (E) und dem Pumpenrad (2.4) angeordnet ist.

27. Anfahreinheit (16) nach einem der Ansprüche 11 bis 25, **dadurch gekennzeichnet, daß** das Turbinenrad (3) räumlich hinter dem Pumpenrad (2) und das Pumpenrad (2) zwischen dem Eingang (E) und dem Turbinenrad (3) angeordnet ist.

28. Anfahreinheit (16; 16.4) nach einem der Ansprüche 11 bis 27, **dadurch gekennzeichnet, daß** diese Bestandteile eines Betriebsmittelversorgungssystems (46) gemäß einem der Ansprüche 5 bis 10 umfaßt.

29. Getriebebaueinheit mit einer Anfahreinheit (16; 16.4) gemäß einem der Ansprüche 11 bis 28.

30. Getriebebaueinheit nach Anspruch 29, **dadurch gekennzeichnet, daß** der Ausgang (A) der Anfahreinheit (16; 16.4) mit mindestens einer Nachschaltstufe gekoppelt ist.

31. Getriebebaueinheit nach einem der Ansprüche 29 oder 30, **dadurch gekennzeichnet, daß** der Ausgang (A) der Anfahreinheit (16; 16.4) mit einem stufenlosen Getriebeteil gekoppelt ist.

32. Getriebebaueinheit nach einem der Ansprüche 29 oder 30, **dadurch gekennzeichnet, daß** diese als Automatgetriebe ausgeführt ist.
